# DEMANDE DE BREVET EUROPEEN

(11) **EP 2 434 598 A1**
(43) Date de publication de la demande: **28.03.2012**
(21) Numéro de dépôt: 11290392.7
(22) Date de dépôt: 05.09.2011
(51) Int. Cl.: H02G 3/04, A47B 21/06

(54) **Accessoire électrique monté mobile en translation dans une ouverture pratiquée dans une paroi**

(30) Priorité: 27.09.2010 FR 1003809
(71) Demandeur: Legrand France, 87000 Limoges (FR); Legrand SNC, 87000 Limoges (FR)
(72) Inventeur: Jarry, Patrice, 72140 Mont Saint Jean (FR)
(74) Mandataire: Orsini, Fabienne

(57) **Abrégé**

L'invention concerne un accessoire électrique (1) adapté à être monté mobile en translation dans une ouverture (101) d'une paroi (100) entre une position rentrée et une position sortie, et comprenant, d'une part, un corps (10), et, d'autre part, un couvercle rigide (20) qui est adapté à obturer l'ouverture de la paroi lorsque l'accessoire électrique est placé en position rentrée, et qui présente une face arrière (22A) tournée vers le corps.

Selon l'invention, le couvercle comporte un renfoncement (28) en creux sur sa face arrière, qui est adjacent au bord périphérique (29) du couvercle pour le passage d'un conducteur électrique (110).

## Description

La présente invention concerne de manière générale le domaine des installations électriques.

Elle concerne plus particulièrement un accessoire électrique tel que défini dans le préambule de la revendication 1.

Elle concerne en particulier les blocs multiprises qui sont montés mobiles à translation au travers d'une ouverture pratiquée dans une paroi d'un bureau, et qui sont équipés d'un couvercle permettant, lorsque le bloc multiprise est en position rentrée, d'obturer esthétiquement l'ouverture pratiquée dans la paroi du bureau.

### ARRIERE-PLAN TECHNOLOGIQUE

On connaît notamment du document EP 1 256 288 un accessoire électrique du type précité dans lequel le corps est constitué par un bloc multiprise et dans lequel le couvercle, qui est monté mobile sur le bloc multiprise pour basculer sur celui-ci, présente une forme de disque symétrique de révolution.

Initialement, le bloc multiprise est en position rentrée et le couvercle obture l'ouverture traversante de la paroi.

Grâce à la mobilité de basculement du couvercle, l'usager peut incliner ce dernier afin de le saisir par sa tranche en vue de manoeuvrer le bloc multiprise depuis sa position rentrée vers sa position sortie. L'usager peut ainsi avoir accès aux prises de courant du bloc multiprise pour y brancher une fiche électrique d'un appareil électrique quelconque.

Une fois ces branchements réalisés, l'usager peut, si la dimension de cette fiche électrique le permet, redescendre le bloc multiprise jusqu'à sa position rentrée. Une fois dans cette position, le couvercle se rabat dans une position légèrement inclinée qui permet aux conducteurs électriques de passer au travers de l'ouverture traversante de la paroi.

L'inconvénient majeur de cet accessoire électrique est que les conducteurs électriques qui passent au travers de l'ouverture traversante sont alors pincés entre le couvercle et le bord de l'ouverture. Ils sont alors soumis à un effort d'écrasement qui réduit leur longévité.

Les conducteurs électriques risquent par ailleurs de se bloquer dans les deux coins formés entre le couvercle et le bord de l'ouverture, empêchant alors tout mouvement du couvercle pour fermer au mieux l'ouverture traversante de la paroi.

Enfin, la forme symétrique de révolution du couvercle n'offre aucune prise à l'usager, si bien que la manoeuvre de l'accessoire électrique depuis sa position rentrée vers sa position sortie peut s'avérer difficile, en particulier lorsque l'usager a les doigts glissants.

### OBJET DE L'INVENTION

Afin de remédier aux inconvénients précités de l'état de la technique, la présente invention propose un nouvel accessoire électrique plus facilement manipulable et générant moins de contraintes sur les conducteurs électriques.

Plus particulièrement, on propose selon l'invention un accessoire électrique tel que défini dans la revendication 1.

Ainsi, grâce à l'invention, lorsque l'accessoire électrique est ramené en position rentrée, le conducteur électrique peut s'engager sous ce renfoncement, entre le couvercle et le bord de l'ouverture traversante de la paroi. L'effort exercé par le couvercle sur ce conducteur électrique se répartit donc mieux sur la périphérie de ce conducteur électrique, ce qui évite qu'il ne soit pincé localement.

Le renfoncement forme en outre un relief qui facilite la manipulation du couvercle lorsque l'usager souhaite manoeuvrer l'accessoire électrique.

D'autres caractéristiques non limitatives et avantageuses de l'accessoire électrique selon l'invention sont définies dans les revendications 2 et suivantes.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective partiellement coupée d'un accessoire électrique selon l'invention, qui est engagé dans une ouverture pratiquée dans une paroi d'un bureau, qui est en position rentrée dans cette ouverture, et dont le couvercle est en position droite ;
- la figure 2 est une vue de détail de la zone II de la figure 1 ;
- la figure 3 est une vue homologue à celle de la figure 2, sur laquelle seule une partie inférieure du couvercle a été représentée ;
- la figure 4 est une vue schématique en perspective du couvercle de la figure 1 ;
- la figure 5 est une vue en plan de dessous de l'accessoire électrique de la figure 1 ;
- la figure 6 est une vue partielle en plan de face de l'accessoire électrique de la figure 1 ;
- la figure 7 est une vue schématique en perspective partiellement coupée de l'accessoire électrique de la figure 1, sur laquelle l'accessoire électrique est en position rentrée et son couvercle est en position inclinée ;
- la figure 8 est une vue schématique en perspective partiellement coupée de l'accessoire électrique de la figure 1, sur laquelle l'accessoire électrique est en position sortie et son couvercle est en position inclinée ; et
- la figure 9 est une vue schématique en perspective de l'accessoire électrique de la figure 1, sur laquelle l'accessoire électrique est en position rentrée et son couvercle est en position intermédiaire, en appui contre un câble d'alimentation électrique.

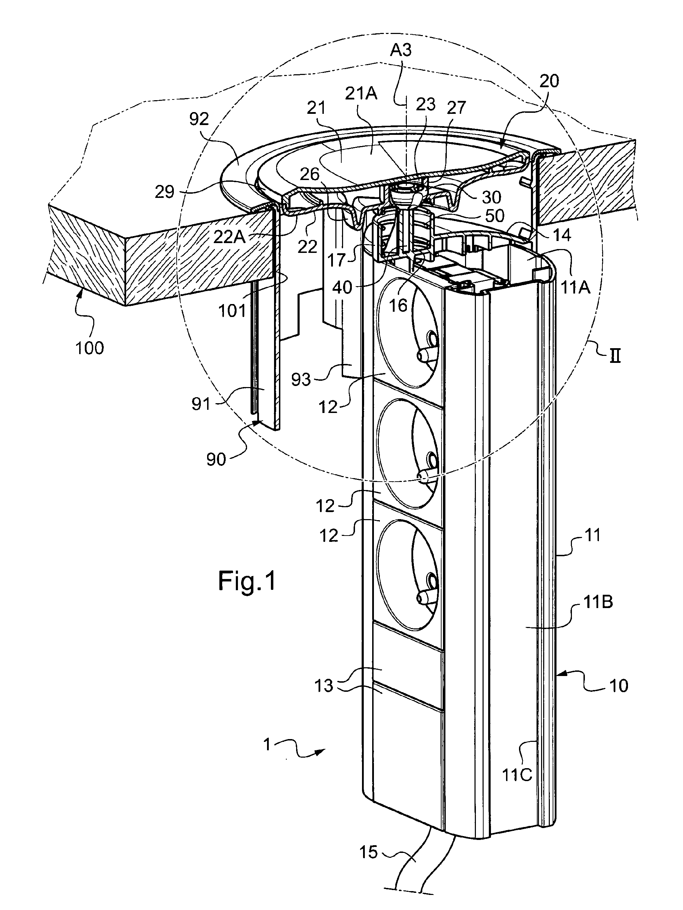

Sur la figure 1, on a représenté une paroi 100 dans laquelle a été pratiquée une ouverture traversante 101.

Cette paroi 100 est positionnée horizontalement. Elle est ici formée par le plateau d'un bureau sur lequel un ordinateur portable peut être posé.

Son ouverture traversante 101 est du type de celles qu'on trouve couramment sur ces bureaux pour permettre le passage d'un câble d'alimentation électrique de l'ordinateur portable. Elle présente toutefois ici un diamètre légèrement supérieur à celui d'une ouverture classique, de l'ordre d'une dizaine de centimètres.

Cette ouverture traversante 101 accueille un guide 90 qui comporte une partie tubulaire 91 de diamètre extérieur égal, au jeu près, à celui de l'ouverture traversante 101 afin d'être engagée dans celle-ci, et une couronne 92 qui borde l'extrémité haute de la partie tubulaire 91 afin de reposer sur la face supérieure de la paroi 100, tout autour de l'ouverture traversante 101.

On a également représenté sur la figure 1 un accessoire électrique 1 monté mobile en translation dans le guide 90 selon un axe de translation A3 qui, en pratique, correspond à l'axe vertical de l'ouverture traversante 101.

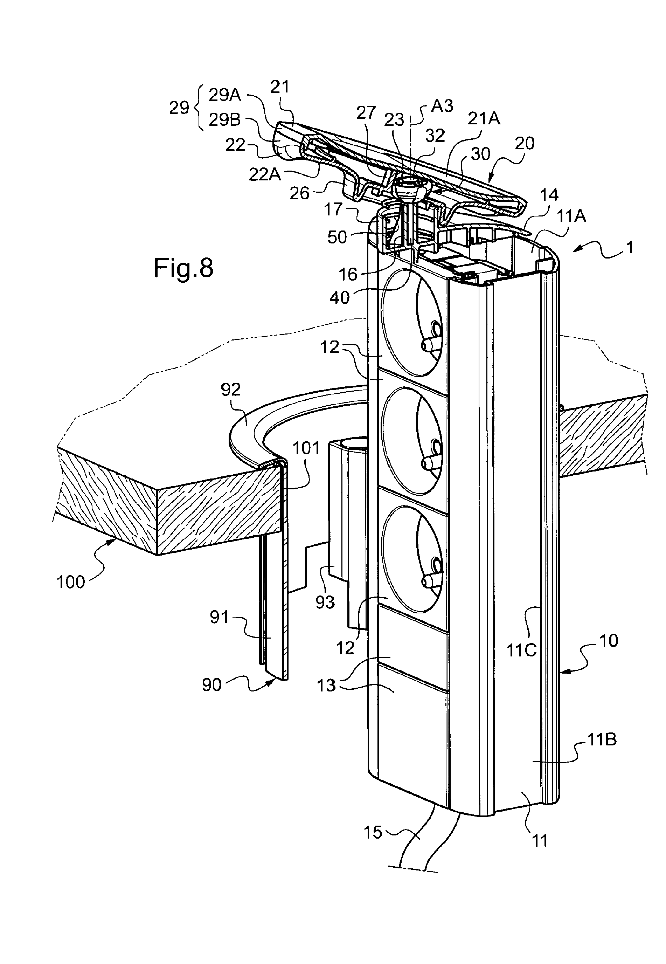

Cet accessoire électrique 1 est plus précisément monté mobile dans le guide 90 entre deux positions extrêmes, dont une position rentrée dans laquelle il est situé sous le niveau de la couronne 92 du guide 90 (figure 1), et une position sortie dans laquelle il fait saillie au-dessus de cette couronne 92 (figure 8).

Tel que représenté sur la figure 1, cet accessoire électrique 1 est principalement composé de deux parties principales, dont un corps 10 qui forme la partie fonctionnelle de l'accessoire, et un couvercle 20 qui est adapté à obturer esthétiquement l'ouverture traversante 101 lorsque l'accessoire électrique 1 est en position rentrée.

Le corps 10 de l'accessoire électrique 1 ne fait pas à proprement parler l'objet de la présente invention et il ne sera donc pas décrit en détail.

Tel que représenté sur les figures, ce corps 10 est constitué par un bloc multiprise offrant plusieurs prises de courant 12. Il pourrait en variante offrir des fonctions autres, telles que par exemple des fonctions d'interrupteur, de disjoncteur, de prise réseau (RJ45)...

Ici, comme le montre la figure 1, ce bloc multiprise 10 comporte un socle 11 profilé qui s'étend selon un axe longitudinal parallèle à l'axe de translation A3 et qui présente une section transversale globalement en forme de U, avec un fond 11A et deux ailes 11 B.

Les extrémités de ces ailes 11 B sont repliées l'une vers l'autre et comportent des rails en vis-à-vis qui permettent le montage direct des prises de courant 12 dans l'espace intérieur du socle 11.

Tel que représenté sur la figure 1, le socle 11 accueille ainsi trois prises de courant 12. Deux opercules 13 sont également montés entre ces rails pour obturer l'espace laissé libre dans l'ouverture délimitée entre les extrémités des deux ailes 11 B.

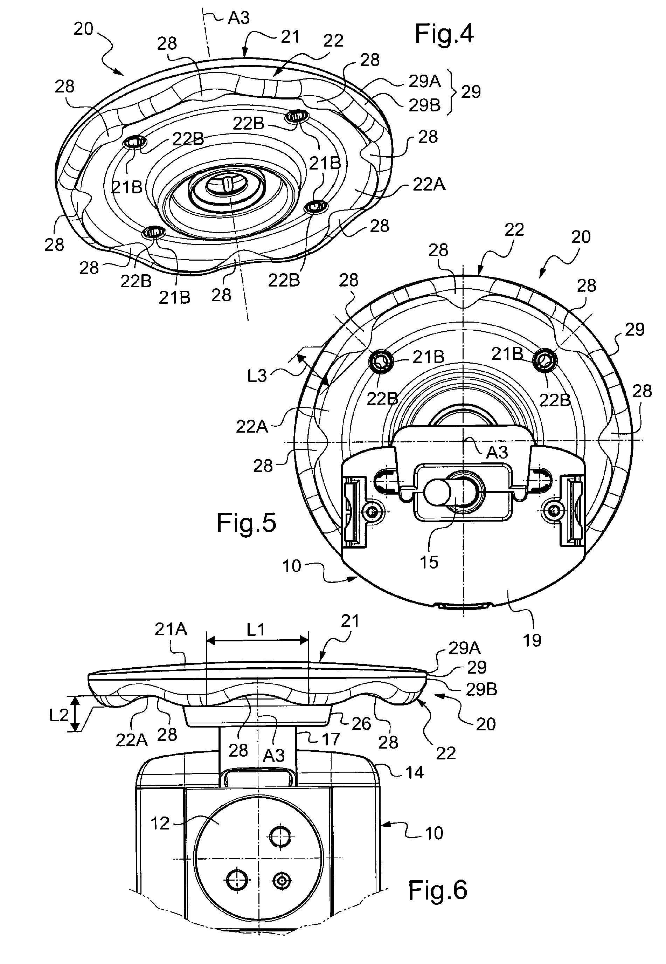

Le socle 11 est par ailleurs fermé à son extrémité basse par un embout inférieur 19 (voir figure 5) par lequel fait saillie un câble d'alimentation 15 qui, d'un côté, est connecté aux prises de courant 12, et qui, de l'autre, comporte une fiche électrique (non représentée) à enficher dans une prise de courant murale pour alimenter les prises de courant 12.

Le socle 11 est également fermé à son extrémité haute par un embout supérieur 14, qui est esthétiquement bombé vers l'extérieur de telle sorte que sa tranche se raccorde continûment à l'extrémité haute du socle 11.

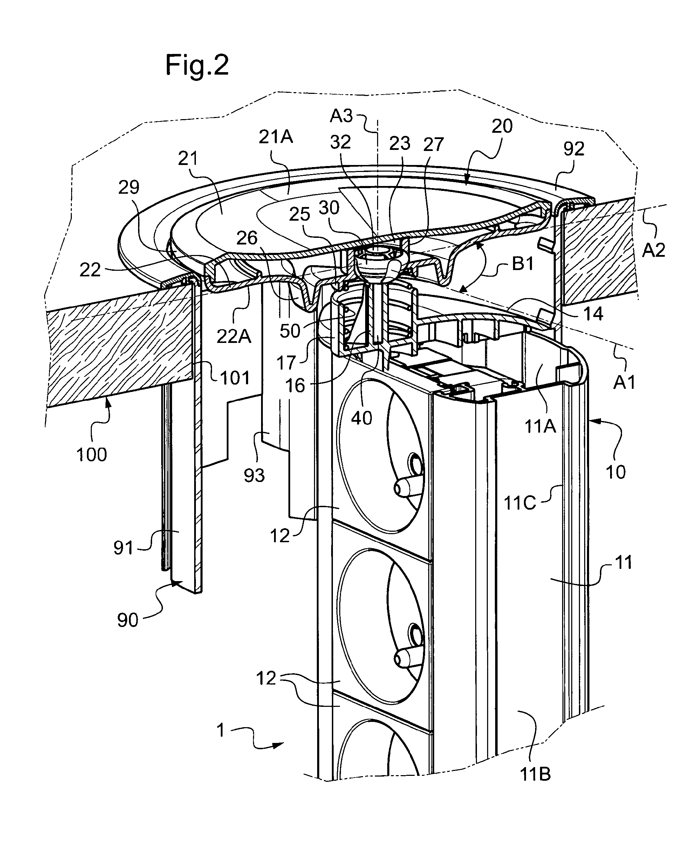

Comme le montrent plus particulièrement les figures 2 et 4, le couvercle 20 présente quant à lui une forme globale de disque épais et creux.

Il présente une face arrière 22A tournée du côté du bloc multiprise 10, une face avant 21A tournée du côté opposé, et une tranche circulaire 29 qui relie les faces arrière 22A et avant 21A.

Le diamètre de la tranche circulaire 29 du couvercle 20 est égal, au jeu près, au diamètre intérieur de la partie tubulaire 91 du guide 90. Le couvercle 20 est ainsi adapté à obturer l'ouverture traversante 101 de la paroi 100 lorsque l'accessoire électrique 1 est placé en position rentrée.

Ce couvercle 20 s'étend dans un plan moyen et présente un axe principal qui est orthogonal à ce plan moyen et qui est confondu avec l'axe de translation A3 lorsque le couvercle 20 est en position pour obturer l'ouverture traversante 101 de la paroi 100.

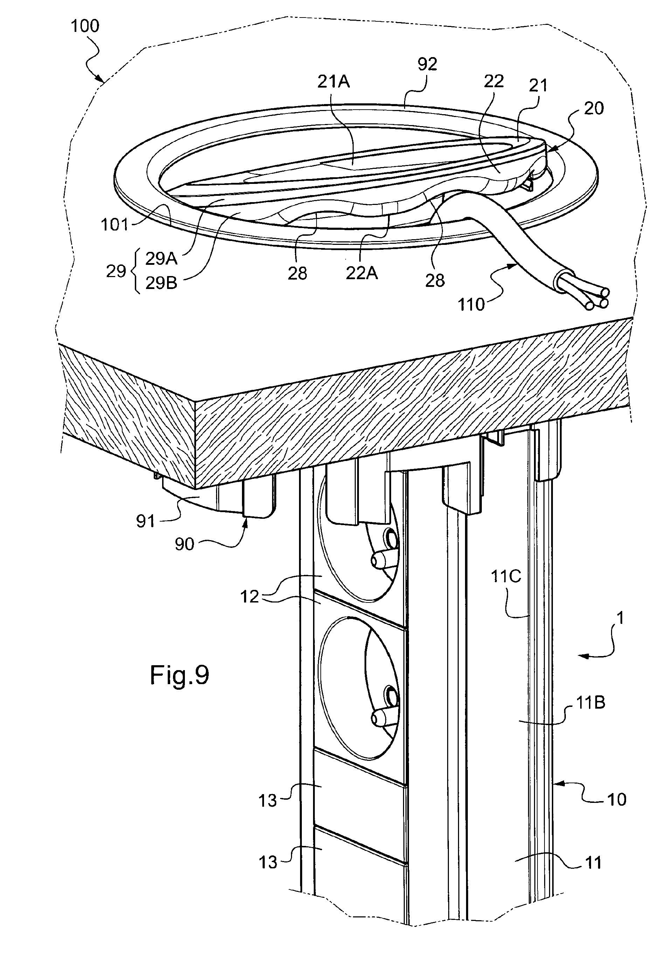

Comme le montre la figure 9, le couvercle 20 est par ailleurs adapté à laisser passer le câble d'alimentation électrique 110 de l'ordinateur portable lorsque l'accessoire électrique 1 est placé en position rentrée.

Selon une caractéristique particulièrement avantageuse de l'invention, pour réduire les contraintes que le couvercle 20 exerce alors sur le câble d'alimentation électrique 110, il est prévu, à la jonction entre la tranche 29 et la face arrière 22A du couvercle 20, au moins un renfoncement 28.

Comme cela apparaît sur les figures 4 à 6, il est plus précisément ici prévu huit renfoncements 28 en creux dans la face arrière 22A du couvercle 20.

En l'espèce, comme cela apparaît plus particulièrement sur les figures 4 et 6, le bord périphérique de la face arrière 22A du couvercle 20 forme un bourrelet en saillie vers l'arrière du couvercle, dans lesquels les renfoncements 28 sont prévus en creux. L'intérêt d'un tel bourrelet est qu'il forme une prise accessible à l'usager.

Bien sûr, en variante, on pourrait prévoir que le couvercle soit dépourvu d'un tel bourrelet et que les renfoncements 28 forment des cavités dans la face arrière du couvercle.

Ces renfoncements 28 s'étendent chacun en hauteur sur une partie seulement de l'épaisseur du couvercle 20, si bien qu'ils ne débouchent pas sur la face avant 21A du couvercle 20 et qu'ils ne modifient pas l'aspect extérieur du couvercle 20.

Vu de face comme cela est représenté sur la figure 6, chaque renfoncement 28 forme une arche sur la tranche 29 du couvercle 20, permettant le passage du câble d'alimentation électrique 110. Cette arche présente une largeur L1 de l'ordre d'une trentaine de millimètres, et une hauteur L2 de l'ordre de trois millimètres.

Vue de dessous comme cela est représenté sur la figure 5, chaque arche se prolonge vers l'axe principal A3 du couvercle 20 sur une longueur L3 de l'ordre d'une dizaine de millimètres, suffisante pour offrir au câble le dégagement nécessaire pour se courber en direction des prises de courant 12 du bloc multiprise 10.

Ces renfoncements 28 présentent des formes identiques et sont régulièrement répartis autour de l'axe principal A3 du couvercle 20. Ainsi, les renfoncements 28 forment ensemble une sorte d'ondulation le long de la tranche du couvercle 20.

Ici, tel que représenté sur la figure 2, le couvercle 20 est formé de deux parties distinctes appelées plateau avant 21 et plateau arrière 22. Ces deux plateaux 21, 22 présentent globalement des formes de disques fins dont les bords extérieurs 29A, 29B sont recourbés l'un vers l'autre pour s'emboîter l'un sur l'autre et pour former la tranche 29 du couvercle 20.

Les renfoncements 28 sont alors formés sur le seul plateau arrière 22 du couvercle 20, de manière qu'ils ne modifient en aucune manière la forme du plateau avant 21.

Comme le montrent les figures 4 et 5, ces plateaux avant 21 et arrière 22 sont équipés de moyens d'assemblage. Ils comportent plus précisément ici des moyens d'encliquetage complémentaires.

Ces moyens d'encliquetage comportent, en saillie sur la face intérieure du plateau avant 21, quatre ergots 21 B régulièrement répartis autour de l'axe principal A3 du couvercle 20, et, en creux dans la face intérieure du plateau arrière 22, quatre fenêtres d'accueil 22B des quatre ergots 21 B.

Les ergots 21 B présentent ici des formes de tubes d'axe parallèle à l'axe principal A2 du couvercle 20. Ils sont fendus axialement en deux parties qui peuvent ainsi fléchir élastiquement l'une vers l'autre lors de l'encliquetage. Ils sont en outre équipés sur leurs faces extérieures, à proximité de leurs extrémités libres, de nervures d'encliquetage adaptées à s'accrocher au bord des fenêtres d'accueil 22B.

Les fenêtres d'accueil 22B sont quant à elles circulaires et traversantes puisqu'elles débouchent sur la face arrière 22A du plateau arrière 22 du couvercle 20.

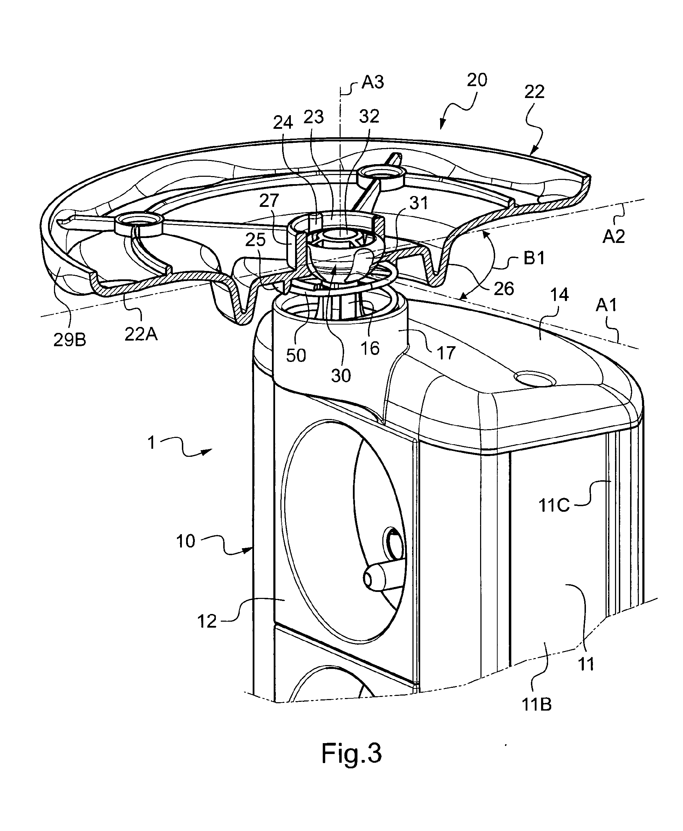

Avantageusement, comme le montrent plus particulièrement les figures 2 et 3, le couvercle 20 est monté mobile à pivotement par rapport au bloc multiprise 10 autour de deux axes A1, A2 distincts, orientés selon des directions qui forment ensemble un angle B1 non nul.

Autrement formulé, le couvercle 20 est monté sur le bloc multiprise 10 de manière à présenter au moins deux mobilités de pivotement par rapport à celui-ci.

Tel que représentés sur les figures, les axes A1, A2 sont orthogonaux à l'axe de translation A3 et sont donc parallèles au plan du débouché de l'ouverture traversante 101. La combinaison des deux pivotements permet alors ici au couvercle 20 de basculer dans l'ouverture traversante 101 autour d'une infinité d'axes contenus dans ce plan.

Le nombre de renfoncements 28 prévus en creux dans la face arrière 22A du plateau 20 permet alors d'offrir au câble d'alimentation électrique 110 de l'ordinateur portable au moins un passage correctement orienté quelle que soit l'orientation de l'axe autour duquel le couvercle est basculé.

Ici, le couvercle 20 est bloqué en rotation autour de l'axe de translation A3. On pourrait toutefois parfaitement prévoir de le laisser libre de pivoter autour de cet axe.

Comme le montrent plus particulièrement les figures 2 et 3, les pivotements du couvercle 20 par rapport au bloc multiprise 10 sont assurés par des moyens de rotule 23, 30.

Ces moyens de rotule comportent une tête de rotule 30 qui est ici fixée au bloc multiprise 10 et qui est engagée dans un logement 23 défini à l'intérieur du couvercle 20. Bien entendu, en variante, on pourrait prévoir d'intervertir les positions de la tête de rotule et du logement, en fixant la rotule au couvercle et en ménageant un logement dans le bloc multiprise 10.

Telle que représentée sur les figures 2 et 3, la tête de rotule 30 présente une forme d'hémisphère. Elle est fixée au bloc multiprise 10 de telle manière que son axe se confonde avec l'axe de translation A3 et que son sommet soit tourné vers le bloc multiprise 10.

Pour sa fixation au bloc multiprise 10, la tête de rotule 30 présente un puits axial 32 d'accueil d'une vis de fixation 40. Ce puits axial 32 présente ici un rétrécissement de section (non visible sur les figures) permettant de former une portée pour la tête de la vis de fixation 40.

La vis de fixation 40 utilisée est ici une vis auto-taraudeuse. Sa tête est située dans le puits axial 32, en appui contre la portée prévue à l'intérieur de ce puits axial 32. Comme le montre la figure 2, son corps fileté est quant à lui engagé dans une cheminée 16 qui s'élève à partir de la face supérieure de l'embout supérieur 14 du bloc multiprise, suivant l'axe de translation A3.

Sur la figure 3, on observe que des nervures de rigidification sont prévues autour de cette cheminée 16 pour optimiser le maintien en position fixe de la tête de rotule 30 par rapport au bloc multiprise 10.

Le logement 23 prévu en correspondance à l'intérieur du couvercle 20 est quant à lui situé entre les faces intérieures des plateaux avant 21 et arrière 22. Il est plus précisément délimité par un berceau 27 d'accueil de la tête de rotule 30.

Ce berceau 27 est à cet effet formé, d'une part, par une partie centrale du plateau arrière 22 du couvercle 20, et, d'autre part, par une nervure tubulaire qui s'élève autour de cette partie centrale du plateau arrière 22, jusqu'à la face intérieure du plateau avant 21.

Le logement 23 délimité à l'intérieur de ce berceau 27 présente une forme complémentaire de celle de la tête de rotule 30.

Comme le montre la figure 3, le berceau 27 comporte plus précisément une face intérieure dont le fond présente une forme hémisphérique de diamètre égal au diamètre de la tête de rotule 30, et dont l'embouchure présente une forme cylindrique pour permettre au couvercle 20 de basculer autour de la tête de rotule 30.

Le berceau 27 est par ailleurs ouvert sur son fond par un orifice de passage de la vis de fixation 40, de diamètre strictement supérieur au diamètre de la cheminée 16, pour permettre au couvercle 20 de basculer sans que le bord de cet orifice de passage ne vienne buter contre la cheminée 16.

Pour bloquer la rotation du couvercle 20 par rapport au bloc multiprise 10 autour de l'axe de translation A3, la tête de rotule 30 est creusée sur sa face externe hémisphérique de quatre rainures de blocage 31 dans lesquelles sont engagées quatre nervures de blocage 24 prévues en correspondance sur la face intérieure du berceau 27.

Pour qu'elles ne bloquent pas les pivotements du couvercle 20 par rapport au bloc multiprise 10 autour des axes A1, A2, ces quatre rainures de blocage 31 et ces quatre nervures de blocage 24 s'étendent en longueur dans des plans qui contiennent l'axe de translation A3. De cette manière, les nervures de blocage 24 du berceau 27 peuvent coulisser dans les rainures de blocage 31 de la tête de rotule 30 lorsque le couvercle 20 pivote par rapport au bloc multiprise 10 autour des axes A1, A2.

Avantageusement, comme le montrent les figures 2 et 3, l'accessoire électrique 1 comporte un moyen de rappel 50 du couvercle 20 dans une position droite, dans laquelle il s'étend dans un plan orthogonal à l'axe de translation A3. Ce moyen de rappel 50 est ainsi prévu pour avoir tendance à ramener automatiquement le couvercle 20 en position droite lorsque l'utilisateur cesse d'exercer un appui sur celui-ci.

De cette manière, lorsque l'accessoire électrique 1 est en position rentrée et qu'aucun câble d'alimentation électrique n'est branché aux prises de courant 12 du bloc multiprise 10, le moyen de rappel 50 permet de ramener le couvercle 20 en position droite, de telle manière qu'il affleure la face supérieure de la paroi 100 et qu'il obture le débouché de l'ouverture traversante 101.

Ce moyen de rappel est en l'espèce formé par un ressort de compression 50 précontraint entre le bloc multiprise 10 et le couvercle 20 et centré sur l'axe de translation A3.

Ce ressort de compression 50 est plus précisément interposé entre la face supérieure de l'embout supérieur 14 du bloc multiprise 10 et la face arrière 22A du plateau arrière 22 du couvercle 20, autour de la cheminée 16.

Pour maintenir le ressort de compression 50 en position, la face supérieure de l'embout supérieur 14 du bloc multiprise 10 et la face arrière 22A du plateau arrière 22 du couvercle 20 présentent chacune une nervure annulaire 17, 25 en saillie, d'axe confondu avec l'axe de translation A3 et de diamètre intérieur égal au diamètre du ressort de compression 50.

Les extrémités du ressort de compression 50 sont engagées dans l'espace intérieur délimité par ces nervures annulaires 17, 25, autour de la cheminée 16, et sont placées en appui contre les faces intérieures de ces nervures annulaires 17, 25.

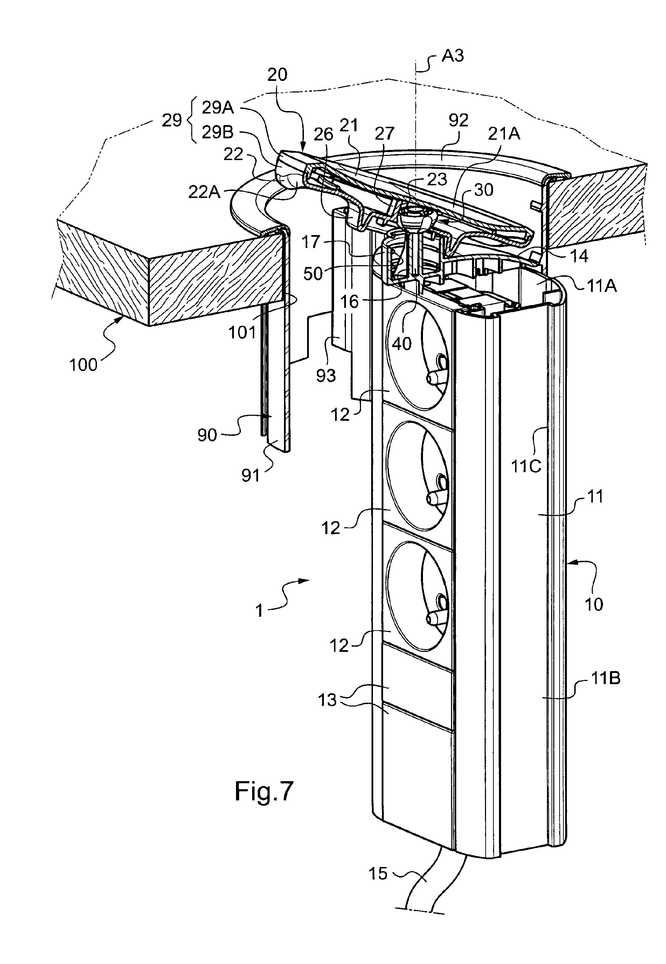

Comme le montrent les figures 3 et 7, il est prévu une butée 26 pour limiter le débattement du couvercle 20 par rapport au bloc multiprise 10 autour des axes A1, A2.

Cette butée est formée par un renflement 26 qui s'étend en saillie de la face arrière 22A du plateau arrière 22 du couvercle 20, suivant un contour centré sur l'axe de translation A3. Tel que représenté sur la figure 3, ce renflement 26 est plus précisément formé par un repli de la paroi du plateau arrière 22 du couvercle 20.

Ce renflement 26 présente une hauteur et une position telles qu'il vient au contact de la face extérieure de la nervure annulaire 17 prévue en saille de l'embout supérieur 14 du bloc multiprise 10 lorsque le couvercle 20 bascule autour des axes A1, A2 d'un angle seuil, de l'ordre d'une trentaine de degrés.

Ici, comme le montre plus précisément la figure 1, le guidage en translation de l'accessoire électrique 1 dans le guide 90 intervient au niveau du socle 11 du bloc multiprise 10.

Les deux ailes 11 B du socle 11 comportent à cet effet chacune une rainure longitudinale 11C, d'axe parallèle à l'axe de translation A3 et présentant un fond plat.

La face intérieure de la partie tubulaire 91 du guide 90 porte en correspondance deux patins 93 qui sont engagés dans ces deux rainures longitudinales 11C et de part et d'autre de ces deux rainures, pour permettre au bloc multiprise 10 de coulisser par rapport au guide 90 selon l'axe de translation A3.

Ces patins 93 sont auto-freinés en ce sens qu'ils portent un revêtement adhérent sur leurs zones de contact avec les ailes 11 B du socle 11. Ainsi, lorsqu'il est placé en position sortie, l'accessoire électrique 1 reste immobile tant qu'aucun effort n'est exercé sur celui-ci pour le faire se translater vers sa position rentrée.

La partie tubulaire 91 du guide 90 comporte par ailleurs des moyens de butée pour limiter le débattement du bloc multiprise 10 par rapport au guide 90 afin d'éviter que l'accessoire électrique 1 ne sorte du guide 90.

Ces moyens de butée ne sont pas représentés sur les figures.

Typiquement, on pourrait prévoir qu'ils se présentent sous la forme de nervures prévues en saillie des patins 93 du guide 90 et en saillie du socle 11 du bloc multiprise 10 pour venir en butée les unes contre les autres lorsque l'accessoire électrique 1 arrive en position rentrée ou sortie.

De telles nervures présenteraient alors préférentiellement des profils en triangles rectangles, avec une face en pente pour autoriser le montage en force de l'accessoire électrique 1 dans le guide 90, et une face droite pour bloquer tout démontage intempestif de l'accessoire électrique 1.

Le montage du couvercle 20 sur le bloc multiprise 10 se déroule de la manière suivante (voir la figure 3).

La tête de rotule 30, équipée de la vis de fixation 40, est tout d'abord engagée dans le berceau 27 du plateau arrière 22 du couvercle 20, de telle manière que le corps fileté de la vis de fixation 40 fasse saillie hors du couvercle 20 par l'orifice prévu au centre du berceau 27.

Le ressort de compression 50 est quant à lui engagé autour de la cheminée 16 prévue en saillie de l'embout supérieur 14 du bloc multiprise 10, de telle manière que sa première extrémité s'engage et se bloque dans l'espace intérieur délimité par la nervure annulaire 17 prévue en saillie de ce même embout supérieur 14.

Le plateau arrière 22 du couvercle 20 est alors ramené en regard de cet embout supérieur 14 du bloc multiprise 10, puis la vis de fixation 40 est vissée dans la cheminée 16, ce qui permet de fixer rigidement la tête de rotule 30 par rapport au bloc multiprise 10 sans pour autant bloquer les mobilités de pivotement du couvercle 20 sur la tête de rotule 30.

Lors de cette opération, la seconde extrémité du ressort de compression 50 s'engage et se bloque dans l'espace intérieur délimité par la nervure annulaire 25 prévue en saillie de la face arrière 22A du plateau arrière 22 du couvercle 20.

Le plateau avant 21 du couvercle 20 est alors encliqueté sur le plateau arrière 22 pour fermer le logement 23 de la tête de rotule 30.

L'accessoire électrique 1 ainsi assemblé est alors prêt à être engagé, par le haut ou par le bas de la paroi 100, dans l'ouverture traversante 101 de la paroi 100, sur les patins 93 portés par la partie tubulaire 91 du guide 90.

Une fois l'accessoire électrique installé dans le guide 90, il se présente à l'utilisateur dans la position représentée sur la figure 1, c'est-à-dire en position rentrée et avec son couvercle en position droite.

Pour avoir accès aux prises de courant 12 du bloc multiprise 10, l'utilisateur exerce un appui sur une zone quelconque de la périphérie du couvercle 20, ce qui a pour effet de faire basculer ce dernier en position inclinée (voir figure 7).

L'utilisateur peut alors saisir fermement le couvercle 20 par sa tranche 29 et exercer une traction sur ce dernier afin d'extraire le bloc multiprises 10 en position sortie (voir figure 8).

Lorsqu'il est relâché, le couvercle 20 est rappelé en position droite par le ressort de compression 50. Le bloc multiprise 10 reste en revanche en position sortie grâce au revêtement adhérent placé sur les patins 93 du guide 90.

L'utilisateur peut alors facilement brancher le câble d'alimentation électrique de son ordinateur portable à l'une des prises de courant 12 du bloc multiprise 10.

Une fois cette opération effectuée, il exerce un effort de pression sur le couvercle 20 pour faire coulisser le bloc multiprise 10 en position rentrée. Dans cette position, comme le montre la figure 9, le ressort de compression 50 ramène naturellement le couvercle 20 en appui contre ce câble d'alimentation électrique 110. L'orientation de l'axe autour duquel le couvercle 20 est basculé s'adapte alors en fonction de la position du câble d'alimentation électrique 110, ce qui réduit les contraintes appliquées par le couvercle 20 sur le câble.

La forme et la position des huit renfoncements 28 prévues en creux dans la face arrière 22A du couvercle 20 permet alors au câble d'alimentation électrique 110 de l'ordinateur portable de s'engager naturellement sous l'un de ces renfoncements 28. Cette forme d'ondulation dépourvue d'arête vive permet ainsi au couvercle 20 d'exercer des contraintes réduites sur le câble.

Dans cette position, le bloc multiprise 10 est ainsi à nouveau caché sous la paroi 100, de manière parfaitement esthétique.

La présente invention n'est nullement limitée au mode de réalisation décrit et représenté, mais l'homme du métier saura y apporter toute variante conforme à son esprit.

En particulier, on pourrait prévoir de revêtir la face arrière du couvercle, au moins au niveau de ses renfoncements, d'une couche souple. Une telle couche souple, par exemple surmoulée sur le couvercle, permettrait de réduire encore les contraintes appliquées par le couvercle sur le câble.

On pourrait également prévoir de monter le couvercle de manière fixe sur le bloc multiprise. On comprend que dans cette variante, la position axiale de l'accessoire électrique dans le guide sera différente selon qu'un câble d'alimentation électrique sera ou non branché dans l'une des prises de courant du bloc multiprise. La forme du couvercle, avec ses renfoncements, sera alors particulièrement intéressante puisque, dans cette variante, les contraintes exercées sur les câbles d'alimentation électrique sont spécialement importantes.

On pourrait aussi prévoir de positionner l'accessoire électrique sur une paroi autre que celle d'une table de bureau. Il pourrait par exemple être positionné dans une cloison murale ou dans un sol, ou encore dans un plan de travail d'une cuisine.

On pourrait par ailleurs prévoir de rigidifier le maintien du guide dans la paroi, par exemple à l'aide d'un écrou vissé sur un filetage prévu en correspondance sur la face externe de la partie tubulaire du guide.

On pourrait enfin prévoir de supprimer le moyen de rappel de l'accessoire électrique, auquel cas l'utilisateur serait contraint de repositionner manuellement le couvercle après chaque manipulation.

Encore en variante, on pourrait prévoir que l'accessoire électrique soit équipé de moyens d'éjection automatique, permettant de faciliter son extraction depuis sa position rentrée jusqu'à sa position sortie. De tels moyens d'éjection automatique, fonctionnant par exemple à gaz, sont déjà connus et ne seront pas ici décrits plus en détail.

## Revendications

1. Accessoire électrique (1) adapté à être monté mobile en translation dans une ouverture (101) d'une paroi (100), entre une position rentrée et une position sortie, cet accessoire comprenant :
- un corps (10), et
- un couvercle rigide (20) qui est adapté à obturer ladite ouverture (101) de la paroi (100) lorsque l'accessoire électrique (1) est placé en position rentrée, et qui présente une face arrière (22A) tournée vers ledit corps (10),
**caractérisé en ce que** le couvercle (20) comporte un renfoncement (28) en creux sur ladite face arrière (22A), qui est adjacent au bord périphérique (29) du couvercle (20) pour le passage d'un conducteur électrique (110).

2. Accessoire électrique (1) selon la revendication précédente, dans lequel ledit renfoncement (28) s'étend en hauteur sur une partie seulement de l'épaisseur du couvercle (20).

3. Accessoire électrique (1) selon l'une des revendications précédentes, dans lequel ledit couvercle (20) comprend au moins un autre renfoncement (28) en creux sur ladite face arrière (22A), et qui est adjacent au bord périphérique (29) du couvercle (20) pour le passage d'un conducteur électrique (110).

4. Accessoire électrique (1) selon la revendication précédente, dans lequel lesdits renfoncements (28) présentent des formes identiques.

5. Accessoire électrique (1) selon l'une des deux revendications précédentes, dans lequel lesdits renfoncements (28) sont régulièrement espacés le long du bord périphérique (29) du couvercle (20).

6. Accessoire électrique (1) selon les deux revendications précédentes, dans lequel lesdits renfoncements (28) forment ensemble une ondulation régulière le long du bord périphérique (29) du couvercle (20).

7. Accessoire électrique (1) selon l'une des revendications précédentes, dans lequel le couvercle (20) comporte une partie avant (21) et une partie arrière (22) distincte de la partie avant (21).

8. Accessoire électrique (1) selon la revendication précédente, dans lequel chaque renfoncement (28) s'étend sur la seule partie arrière (22) du couvercle (20).

9. Accessoire électrique (1) selon l'une des revendications précédentes, dans lequel le couvercle (20) est monté mobile à pivotement par rapport au corps (10) autour d'un premier axe (A1).

10. Accessoire électrique (1) selon la revendication précédente, dans lequel le couvercle (20) est monté mobile à pivotement par rapport au corps (10) autour d'un second axe (A2) dont la direction forme un angle (B1) non nul avec la direction dudit premier axe (A1).
